# EUROPEAN PATENT APPLICATION

(11) **EP 1 986 164 A2**
(43) Date of publication of application: **29.10.2008**
(21) Application number: 08251513.1
(22) Date of filing: 24.04.2008
(51) Int. Cl.: G07F 7/08, G06Q 20/00, H04L 29/06

(54) **Communication system and method**

(30) Priority: 26.04.2007 NG 2252007; 26.04.2007 NG 2242007
(71) Applicant: First Inland Bank PLC, Plot 4/6, Ade tokunboh Ademola Street Victoria Island Lagos, Lagos State (NG)
(72) Inventor: Oguntonade, Deji, Lagos Lagos State (NG); Atanda, Femi, Lagos Lagos State (NG)
(74) Representative: Watterson, Peer Marten John

(57) **Abstract**

A transaction control system (50) for authenticating one or more participants in a transaction, said control system comprising:
means (52) for communicating with said one or more participant;
means (62) for identifying said one or more participant;
means (64) for initiating a transaction by suitable communication with a transaction system, wherein said initiating means only initiates said transaction when said participant is identified, and wherein said identifying means identifies said participant by an item used by said participant in communicating with said transaction control system.

## Description

### TECHNICAL FIELD

This invention relates to a method and apparatus for communication. In particular, the invention relates to identifying a participant in a communication link.

### BACKGROUND TO THE INVENTION

Certain types of communication are particular well suited to communicate the necessary information needed to complete a transaction. For example, during recent years, communication protocols and processes have been developed for Internet-based communications to allow relatively secure transactions (which are often financial in nature).

An essential element of a transaction is the need to identify the participants in the transaction. Once identified, the identity needs to be verifiable so that some form of a check that the stipulated identity is true may be performed. A lack of sufficient verification of the identities of the parties involved may lead to abuse such as fraud. This has resulted in complex forms of identification verification. For example, Internet banking uses convoluted forms of identifying a person as the true account holder by, for example, requiring possession of a card reader which generates a passkey by reading the participant's bankcard and requiring the participant to enter their PIN number. Other systems require the use of complex passwords and pass phrases.

However, in many developing economies the infrastructure needed to support such banking systems is not available, particularly in rural areas. Furthermore, many potential participants in transactions lack the required education or literacy to interact with known transaction systems.

As in many considerations relating to security and trustworthiness of systems, there is a balance between complexity and security: the more complex a system is, the more trustworthy it may be. However, there is a cost and difficulty of use associated with the complexity.

It is therefore desirable to provide a transaction processing system and associated transaction control system providing authentication for a transaction processing system which provide identification and authentication of participants communicating with the system, but which are easy to use and relatively cheap to install and maintain.

### SUMMARY OF THE INVENTION

According to a first aspect, the invention provides for a transaction control system for authenticating one or more participants in a transaction, said control system comprising:
means for communicating with said one or more participant;
means for identifying said one or more participant;
means for initiating a transaction by suitable communication with a transaction system, wherein said initiating means only initiates said transaction when said participant is identified, and wherein said identifying means identifies said participant by an item used by said participant in communicating with said transaction control system.

Identifying a participant to the transaction according to an item used by the participant in communicating with the transaction control system is both convenient and relatively easy to implement. This, in turn provides a balance between convenience and ease of use on the one hand and trustworthiness on the other which finds application in many markets where ease of use and lack of infrastructure are important characteristics.

Preferably the means used to identify the participant has a unique identification number used in the communication and it is then this number which is used to identify the participant when the transaction occurs. More specifically, the participant may be identified by their cellular telephone number.

This identification according to an item used to communicate between the transaction control system and the participant may be used even where the participant uses more than one item to communicate with the transaction control system.

Said item used by said participant may be a mobile communications device and wherein said transaction control system identifies said participant according to an address of said mobile communications device.

Said communication means may communicate according to the Short Message System (SMS) protocol and said mobile communications device is a mobile phone. Mobile phones have the advantage of being ubiquitous and being readily identifiable. Furthermore, the infrastructure needed to support communications by mobile phone can easily reach communities where fixed line communications have not been established.

Said participant may be identified according to a phone number of said mobile phone.

Said transaction may include a transfer of funds.

Said communication means may communicate with two participants and both participants may be identified according to items used by said respective participants in communicating with said communication means of said transaction system.

According to a further aspect, the invention provides for a method of authenticating one or more participants in a transaction, said method comprising the steps of:
communicating between a transaction control system and said one or more participant;
authenticating said one or more participant;
communicating with a transaction system to initiate a transaction, wherein said step of communicating with said transaction system only occurs when said participant is authenticated, and wherein said step of authenticating said participant is based on an item used by said participant in communicating with said transaction control system.

According to a further aspect, the invention provides for a transaction processing system comprising a participant identification system, a participant communication system and a storage system for recording an outcome of said transaction, wherein sad participant communication system uses a first item to establish a channel of communication between said participant and said transaction processing system, said participant identification system bases an identification of said participant on an item used to establish said communication channel, wherein said transaction processing system is adapted to authenticate said participant and, on a basis of said authentication, perform a transaction.

Said transaction processing system may be adapted to authenticate said participant if said identity of said participant confirms said participant as an account holder on said system.

The system may be adapted so that no further participant authentication is required for a successful transaction.

### BRIEF DESCRIPTION OF THE DRAWINGS

Preferred embodiments of the invention will now be described with reference to the accompanying drawings in which like numerals have been used to denote like components and wherein,
Figure 1 is a schematic representation of infrastructure necessary to conduct a transaction incorporating an embodiment of the invention;
Figure 2 is a schematic representation of a portion of Figure 1;
Figure 3 is a process diagram illustrating a first transaction;
Figure 4 is a process diagram illustrating a second transaction;
Figure 5 is a process diagram illustrating a third transaction;
Figure 6 is a process diagram illustrating a fourth transaction;
Figure 7 is a process diagram illustrating a fifth transaction;
Figure 8 is a process diagram illustrating a sixth transaction;
Figure 9 is a process diagram illustrating a process of distributing cards;
Figure 10 is a process diagram illustrating a process of activating the cards of Figure 9; and
Figure 11 is a network diagram of an embodiment of the invention.

### DESCRIPTION OF PREFERRED EMBODIMENTS

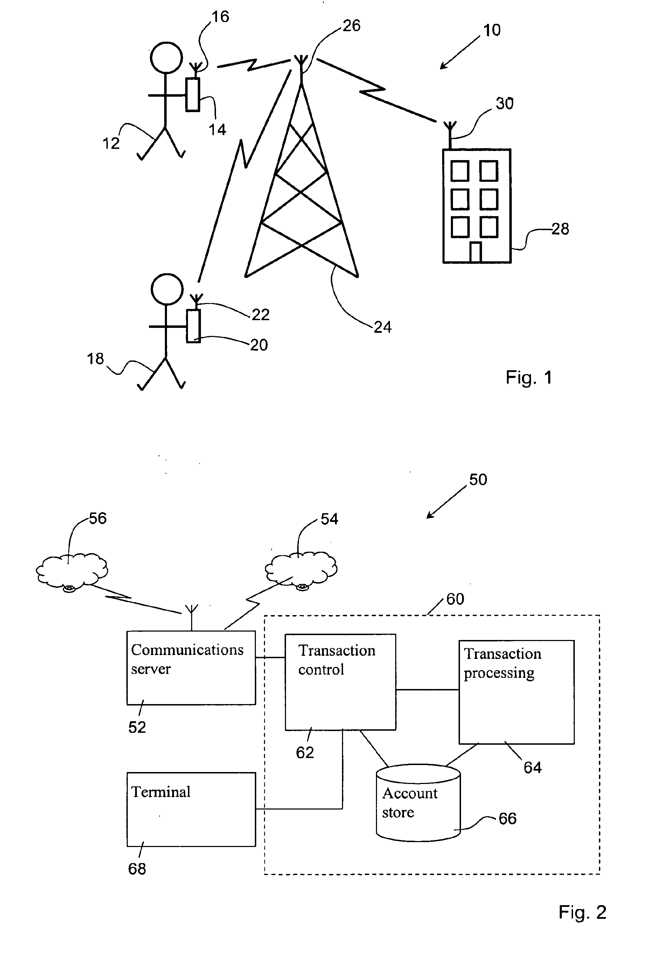

Figure 1 illustrates a cellular telephone communications infrastructure 10 which includes a user 12 having a mobile cellular telephone 14 which communicates by means of antenna 16. A further user 18 uses respective mobile cellular telephone 20 with antenna 22 to communicate. The telephones 14 and 20 communicate with cellular mast 24 which also has an antenna 26 for communicating by means of the cellular telephone network. A building 28 has an antenna 30 which enables residents of the building to communicate via the cellular communications network.

Figure 2 illustrates a transaction backend 50 located in the building 28. In the embodiment illustrated, the transaction backend 50 belongs to a bank residing in building 28 of Figure 1. The backend 50 comprises a communications server 52 which is connected to the cellular telephone network (here represented by cloud 54), as well as being connected to the Internet 56. The communications server 52 is connected to a transaction server 60 which includes a transaction control component 62, a transaction processing component 64 and an account store 66. Transaction control component 62 is connected to transaction processor 64 and to account store 66. Account store 66 is further connected to transaction processing component 64. The components illustrated in Figure 2 are schematic and may be implemented as separate computers or as software running on the same computer without affecting the manner in which embodiments of the invention operate.

During use, a user (which may be either of the users 12 or 18 illustrated in Figure 1) communicates with the communications server 52 by means of the cellular telephone network 54 or the Internet 56. In the embodiment illustrated a user is identified according to their cellular telephone number. When the communication with the communications server occurs by means of the cellular telephone numbers 14 and 12 (Figure 1), the appropriate numbers are determined, where possible, from the communications. If the GSM or other cellular telephone networks are used, the telephone number for a transaction participant can often be determined from the communications originating from that participant. If the user uses the Internet to communicate with the communications server 52, a suitable form is presented to the user to enable him to enter the appropriate telephone number so that he may be identified thereby. The data required for specific transactions is explained in greater detail below.

As users are identified according to their cellular phone numbers, the account store 55 stores account information where each account is identified according to a corresponding cellular phone number.

The transaction control component 62 ensures that each user of the system can be identified by verifying that the telephone number specified by a user corresponds to a telephone number associated with an account in the account store 66. As part of this verification process, the transaction control component 62 ensures that the identification number entered by the user complies with the expected format regarding the number of expected digits.

System 50 further comprises a terminal 68 which is used by the teller of the bank during transaction processing and on which messages to the teller are displayed.

Only if the user passes the verification by the transaction control component 62 is the transaction allowed to continue. The reminder of the transaction is carried out by the transaction processing system 64 and these two components operate, depending on the transaction involved, in the manner described below.

Users of the transaction server 60 may be initiators of transactions, recipients in transactions or the facilitators of the transactions (such as a bank or representative of the bank).

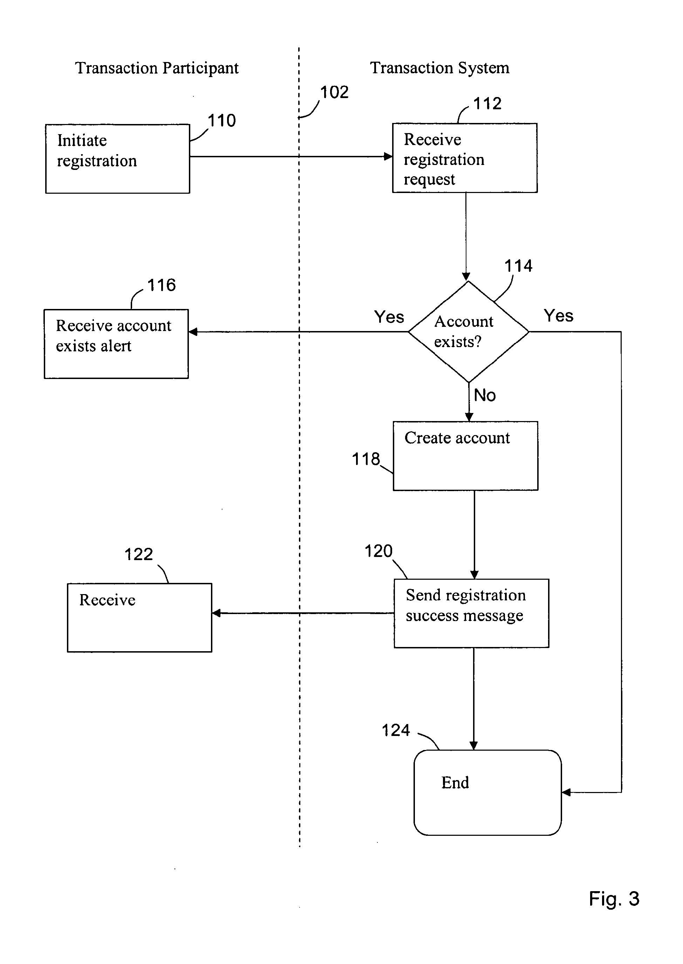

Figure 3 illustrates a process diagram 100 describing a process whereby the user 12 is registered as a user of the system. Dashed line 102 serves to demarcate those steps occurring at the user (here termed the "transaction participant"), i.e. those process steps lying to the left of the line 102 and the steps occurring at the transaction server 60, i.e. those to the right of line 102.

At step 110 the user 12 begins the registration process. In this embodiment of the invention, a user may register himself as a user of the system in one of two ways: either by sending a Short Message Service (SMS) message to a specified number or by registering over the Internet. In both cases, the user will supply their mobile phone number. If, for example, the user sends an SMS, but has disabled the sending of his caller ID, the transaction control component will determine that there is no phone number associated with the communication from the user 12 and will prevent any further processing. This is applied to all communications received from the user for all transactions. Similarly, if the user submits a registration over the Internet, but does not specify a phone number, or specifies a phone number which is in the incorrect format, the transaction control component will detect this and prevent further processing of the registration request.

The process will then continue to step 112 which occurs at the transaction server 60 when the system receives the registration request from the communication component 55. Specifically, the communication component 52 will pass the message on to the transaction control component 62 of the transaction server 60. At the following step 114, the transaction control component 62 will verify whether the cellular telephone number specified by the user corresponds to an account number (identified by telephone number) in the account store 66. If the account exists, the process will send a message to the user in step 116 and terminate by proceed to step 124.

If the account does not exist, the user is considered to have been identified for the purposes of this transaction and the process will then be handed to the transaction control component 62. This transfer of process control marks the initiation of the registration transaction. It is to be realised that in the case of the registration of a new account, the transaction requires the identification of the user as a user not previously registered (i.e. where no previously created account identified by that cellular telephone number exists in the account store 66).

The process will then proceed to step 118 where the transaction control component 62 creates the account identified by the relevant telephone number. The corresponding records are written to the account store 66. Details of the relevant data needed are known in the art and will not be further described herein, but include the relevant details pertaining to the user (and the process may involve additional steps to ascertain this data from the user). In this embodiment, the user is required to stipulate their first name, last name and address, but in other embodiments other information may be required before a user is allowed to open an account.

Once the account has been successfully created, the process moves to step 120 where the user is informed that the account was created, and at step 122 this message is received by the user. The manner in which the user is informed will depend on the manner in which the user is interacting with the transaction server 60. If the user is communicating over the Internet, these messages will be displayed on the screen of the computing device used by the user. Alternatively, if the user is using his cellular telephone, the transaction control component will communicate with the user by SMS message (via communications component 52). Once the message indicating that registration was successful has been sent, the process is terminated at step 124.

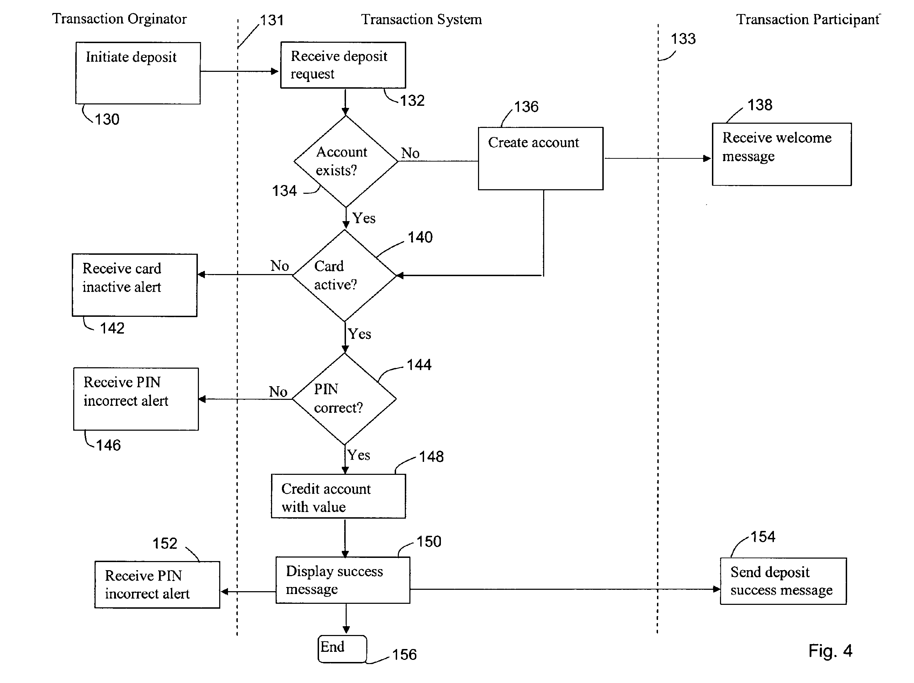

Figure 4 illustrates the process whereby a transaction originator deposits cash into the account of a transaction recipient on the transaction server 60. Line 131 denotes the delineation between the transaction originator (which may be one of the users illustrated in Figure 1) and the transaction system 50, whereas line 133 denotes the delineation between the transaction server 60 and the recipient of the funds.

In a process not described here, the transaction originator obtains a card by purchasing the card at a retail outlet. The card includes an identification number and a PIN. At step 130 the transaction originator initiates the deposit by sending an SMS with a predefined structure and which includes the card identification number, PIN and the phone number of the recipient (if different to the telephone from which the message is being sent). In this embodiment the required format of the SMS message will be "Flash <phone no. of recipient> <card PIN><card identification number>".

The process then proceeds to step 132 where the transaction control component 62 will verify whether the account (identified by the telephone number) still exists. If the account does not exist, the account will be created (see above) in step 136 and the recipient of the funds (i.e. account holder) informed of this and of the initial password for the account in step 138. Once the account has been created, the process will proceed to step 140.

If it is determined that the account does exist (at the verification step 134), the process will proceed to step 140 where the transaction processing component 64 determines whether the card is active. At this point, (after successful completion of step 134) it is determined that the user has been identified for the purposes of the transaction and the control of the process passes to the transaction control component 64 which then initiates the deposit transaction. However, in an alternative embodiment, steps 140 and 144 described below are part of the verification process.

If the card is not active, the user is informed of this in step 142. If the card is active, the PIN of the card is verified at step 144. If the incorrect PIN was entered by the transaction originator in step 130, a message is sent to the user informing him of this in step 146 (and the user can then re-enter the information).

If the PIN is correct, the process proceeds to step 148 where the account is credited with the amount from the card. At the next step, step 150, a message is displayed that the deposit was successful and, at the same time, a message is sent to the transaction originator (152) and to the funds recipient (154) informing them of the successful deposit. It is to be realised that the deposit originator may or may not be the same person as the person receiving the funds in their account. The process will terminate at point 156.

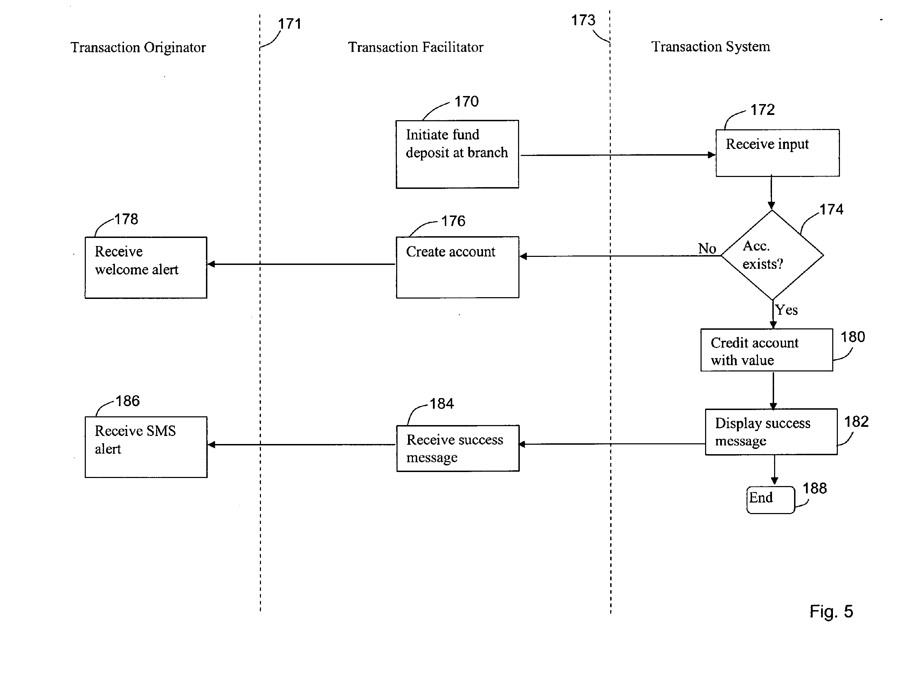

Figure 5 illustrates the process whereby a user (here a transaction originator) deposits money in an account by handing the money to the teller in the bank. In this case, the terminal 68 is used by the teller to communicate with the communications component 52. The dashed line 171 denotes the delineation between the transaction originator and the transaction facilitator (here the teller and bank) and dashed line 173 delineates between the transaction facilitator and the transaction server 60.

At step 170 the deposit transaction is initiated by the transaction originator handing a deposit slip and the corresponding funds to the teller. The deposit slip identifies the account into which the funds are to be paid by a cellular telephone number. The teller will input the information into an appropriate terminal connected to the transaction server 60. At step 172 the transaction server 60 receives the information pertaining to the deposit.

The process will then proceed to step 174 where the transaction control component 62 of the transaction server 60 determines whether the specified account exists by querying the account store 66. If the account does not exist, the account is created at step 176 and the account holder (which in this case is the transaction originator, but could be a third party) is informed of the account creation at step 178. If it is determined at step 174 that the account does exist, or once the account has been created, the process proceeds to step 180 where the account is credited with the value of the funds handed to the teller. Step 180 signals the initiation of the transaction and the identification of the user. After step 174 control of the process moves from the transaction control component to the transaction processing component 64.

Then, at step 182, a message indicating the successful crediting of the account is displayed to the teller at step 184. The account holder is also informed of the successful crediting of the account in step 186. The process will then end at step 188.

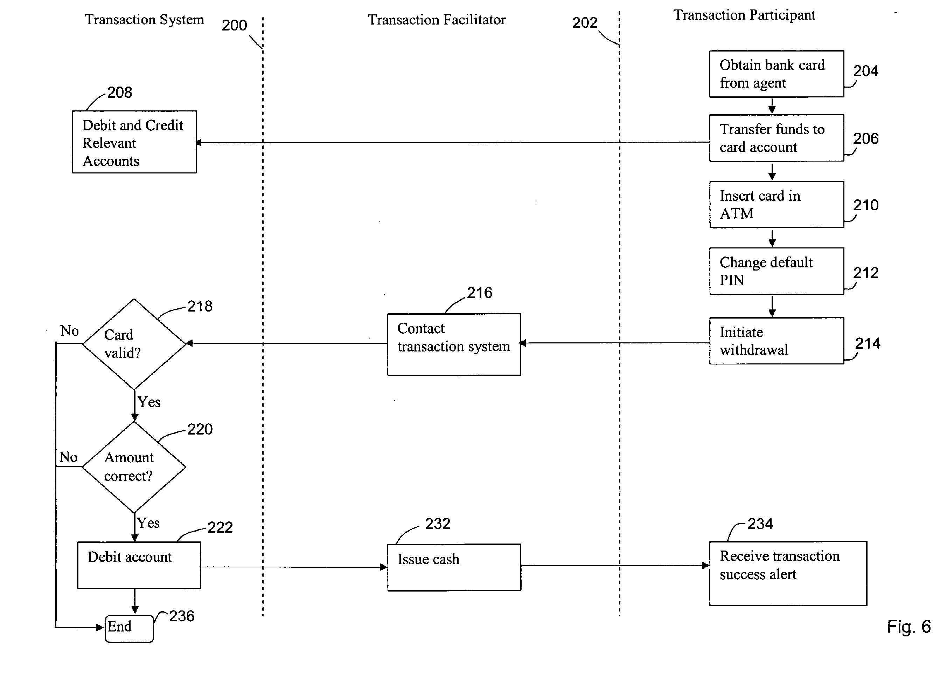

Figure 6 illustrates the process for cash (or other funds) withdrawal from an account. Line 200 delineates between the transaction server 60 and the transaction facilitator (here an Automatic Transaction Machine - ATM connected to the transmission system 50), and line 202 delineates between the ATM and the transaction participant (here the recipient of the funds).

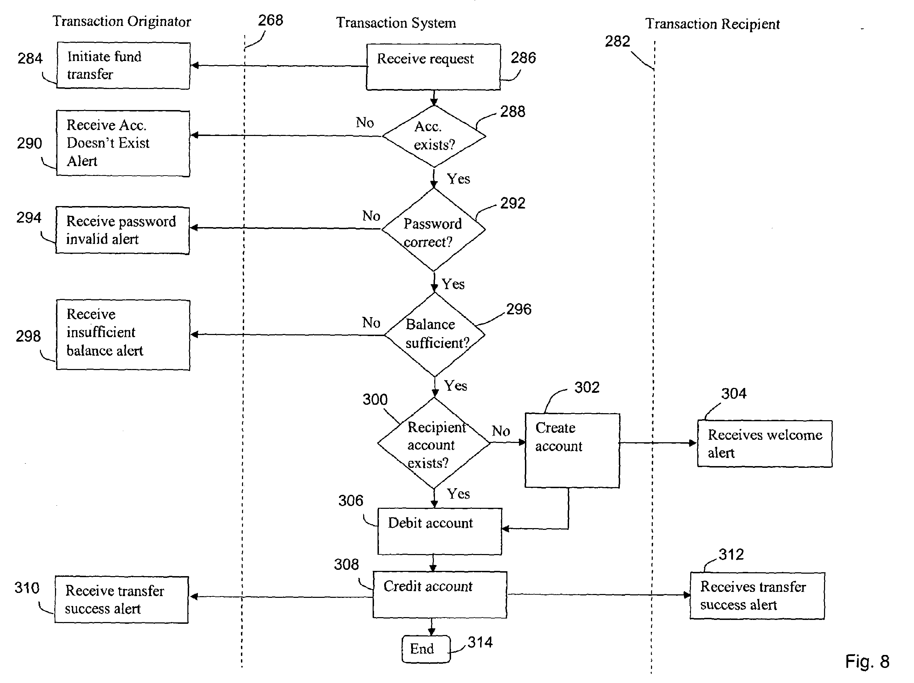

At step 204 the transaction participant obtains a card from a vendor. The card has an account number and a PIN number. At the following step 206, the participant transfers funds to the account number of the card (in the manner described below with reference to Figure 8). At step 210 the transaction participant inserts the card in the ATM and inputs the default PIN (if the PIN is incorrect, the process will terminate - not shown on the Figure). At step 212, the transaction recipient changes the PIN of the card and then, at step 214 the recipient will initiate the withdrawal by selecting the appropriate option at the ATM. At step 216 the ATM will contact the transaction server 60 by means of the communication component 52.

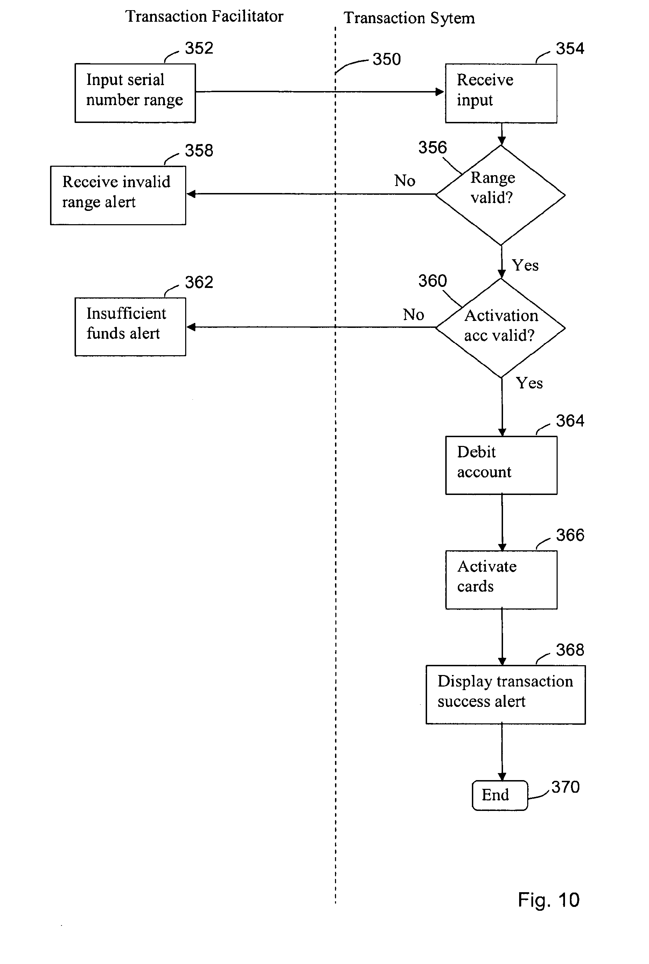

At step 218 the transaction control component 62 will verify that the card is valid by verifying that the account for that card exists in the transaction store 66 and that the account has been activated (see Figure 10 and corresponding description). If the card account is verified, the process proceeds to step 220 where the transaction processing component 64 determines whether the amount requested is available in the account of the card. Step 218 marks the identification (successful or not) of the participant and the movement of control of the process from the transaction control component 62 to the transaction processing component 64 (and the corresponding initiation of the transaction).

If the stipulated amount is available, the process proceeds to step 222 where the card account is debited with the requested amount. If either of the steps 218 or 220 fail, the process will terminate at point 236. Once the card account has been debited at step 222, the cash is issued by the ATM at step 232 and the transaction participant receives the cash as well as a message, at step 234, informing him that the cash has been issued. The process then ends (236).

In an alternative embodiment, the card obtained by the transaction participant may correspond to more than one account and the transfer of the stipulated amount then occurs between the account of the transaction participant and each of the accounts associated with the card. Furthermore, a commercial entity receiving payments from many individuals may issue their own cards where each card is associated with the same account so that transfers by participants using such cards will be made to the entity's account.

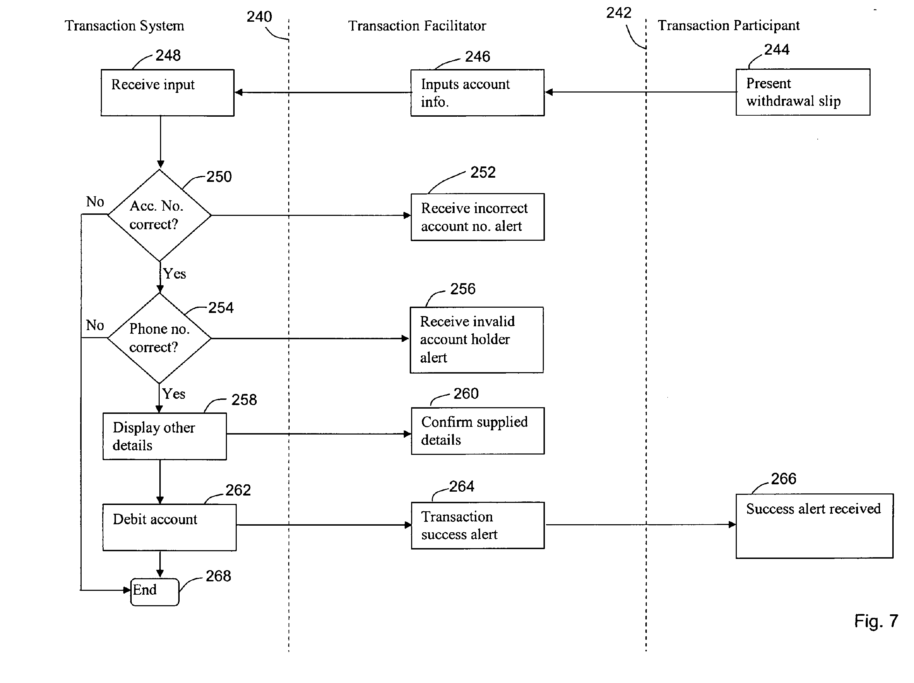

Figure 7 illustrates the withdrawal of funds at a bank (transaction facilitator) by a transaction participant. The transaction facilitator is represented by a teller (not shown in the diagrams). Dashed line 240 delineates between the transaction server 60 and the transaction facilitator, and dashed line 242 delineates between the transaction server 60 and the transaction participant.

The transaction is initiated by the transaction participant (who is also the account holder) who fills out a withdrawal slip containing his account number in the form of a cellular telephone number. The withdrawal slip, together with appropriate identification is presented to the teller at step 244. The teller then inputs the relevant information into a terminal at step 246 and the information is received by the transaction server 60 at step 248. The transaction control component 62 will, at step 250, verify that the account exists.

If a non-existent account number is provided, the teller is informed at step 252. If the account number exists, the transaction proceeds to step 245 where the account number (telephone number) of the recipient is checked. If the account exists, but belongs to someone other than the transaction participant, this information will be displayed to the teller at step 256. Otherwise, the process will proceed to step 258 where the remaining details, such as the account holder's address are displayed to the teller who may confirm this information against, for example, identification supplied by the transaction participant. Once all of this has been verified, the process proceeds to step 262.

At step 262 the transaction participant's account is debited and an alert is displayed to the teller at step 264 indicating that the server 60 successfully completed the transaction. At the same time the account holder (who is also the transaction participant) receives an alert that the transaction was successful. The teller will then hand the money to the participant. The process ends at point 268.

Figure 8 illustrates the process whereby one transaction participant (here the transaction originator) transfers funds to the account of another transaction participant (here referred to as the transaction recipient). The transaction recipient may be the card referred to above with reference to Figure 6. Alternatively, a single person may hold two accounts and therefore the originator and the recipient may be the same person. Dashed line 280 delineates between the originator and the transaction server 60. Dashed line 282 delineates between the transaction server 60 and the recipient.

The process begins at step 284 where the transaction originator sends a message with a predefined structure and includes the originator's account number, the receivers account number, a password and the amount to be transferred. It will be realised however that it may not be necessary to include the originator's telephone number when the message takes the form of an SMS message. At step 286 the fund transfer request is received by the transaction server 60. At the following step, step 288, the transaction control component 62 verifies that the originator's account exists in the account store 66. If the account does not exist, the originator is sent a message indicating that the specified account does not exist (step 290). If the account does exist, the process proceeds to step 292 where the transaction control component will verify the originator's password. If the password is not correct, the originator is sent an alert that the password is not correct (step 294). If the password is correct the transaction control component deems the originator to be identified and the transaction is then initiated by the transaction processing component 64 (it is determined that the originator has been identified).

At step 296 the transaction processing component will determine whether there are sufficient funds in the account of the originator to cover the transfer. If insufficient funds exist in the account, the originator is informed in step 298. If sufficient funds do exist, the process proceeds to step 300 where the transaction processing component 64 will determine whether the recipient has an account. If the recipient does not have an account, the account is created at step 302 and the recipient is sent a welcome message at step 304. In both instances, the process will proceed to step 306 where the originator's account is debited with the specified amount. Then, at step 308, the recipient's account is credited with the specified amount and both the originator (step 310) and the receiver (step 312) are informed of the success of the transfer. The process will end at step 314. The process will also end on reaching any of the steps 290, 294 or 298.

Each of the transactions of Figures 3 to 8 have been described with reference to users interacting with the transaction server 60 by means of cellular telephones. It is to be realised that other forms of interaction could be used. For example, the user or users may interact with the system by means of the Internet, or using other communication means.

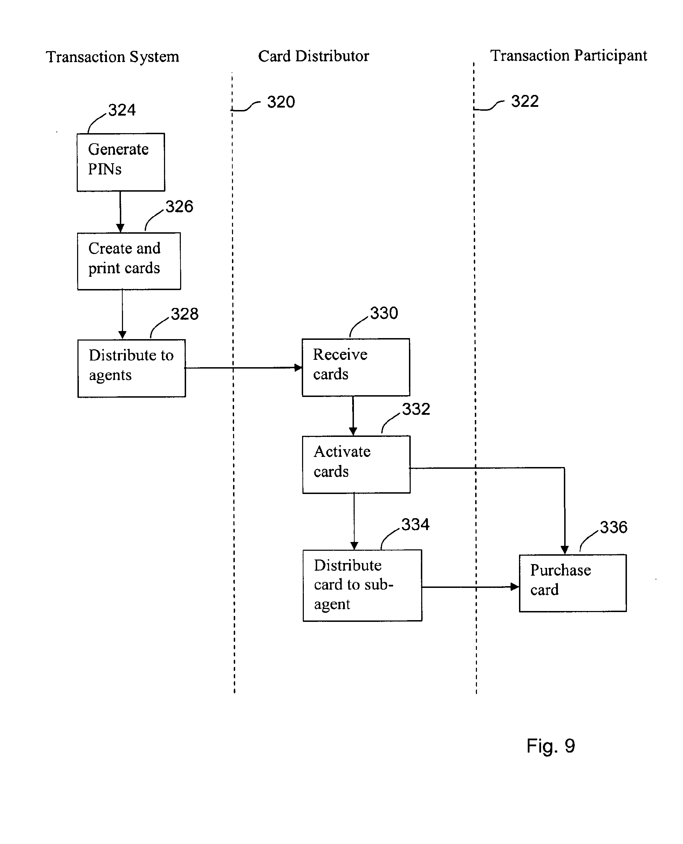

Figure 9 illustrates a process whereby the cards referred to in the above description of the process of Figure 4 may be issued. Dashed line 320 delineates between the transaction server 60 and a card distributor. The card distributor is generally a retailer who sells the card to a transaction participant. Dashed line 322 delineates between the card distributor and the transaction participant.

At step 324 the transaction server 60 generates a plurality of personal identification numbers (PINs), each PIN corresponding to a card. Each card is identified by a serial number which in turn corresponds to an account number stored on the transaction store 66. At the next step, step 326 the cards are created and printed. In this embodiment, the PIN numbers are hidden by a substance which can be removed by scratching to reveal the PIN number. Cards of this form are known in the art and will not be further described. A number of different types of cards, each type with a corresponding face value are created. Although the transaction store contains accounts corresponding to each card, these accounts, when created are marked as inactive, as a security measure.

The process proceeds to step 328 where the cards are distributed to distributors who purchase the cards at face value plus an additional commission charge. At step 330 the distributors receive the cards and, at step 332 the distributor activates the cards according to the process described below with reference to Figure 10. Once the cards have been activated, they are sold to the eventual user, the transaction participant, at step 336 or to a sub-agent at step 334 who then sells them on to the transaction participant.

Figure 10 illustrates the process whereby a card distributor activates the cards. Generally this will be done for a plurality of cards with a serial number range. This is done when the distributor contacts the transaction system in any one of a number of known ways (such as over the Internet).

The actions performed by the transaction facilitator and the transaction server 60 are delineated by dashed line 350. At step 352 a representative of the facilitator (such as a teller) inputs the serial number range of the cards to be activated. At following step 354 the input range is received by the transaction server 60 and the process proceeds to step 356 where the transaction system will determine whether the specified range is valid and corresponds to accounts stored in the account store 66 which are presently marked as inactive. If the range is not valid an appropriate message is displayed to the teller at step 358. If the range is valid, the process proceeds to point 360.

At step 360, the transaction server 60 will determine whether the account belonging to the distributor has sufficient funds to cover the purchase of the cards corresponding to the requested serial number ranges. If the account has insufficient funds, the distributor is informed of this at step 362. If sufficient funds exist in the distributor's account, the process will proceed to step 364 where that account is debited. Then, at step 366, the cards will be activated and a message that the transaction was successful displayed to the operator of the system 50 at step 368. The process will then terminate at step 370.

**Table 1**

| **SN** | **Function** | **Keyword** | **Parameters** | **Example** |
|---|---|---|---|---|
| 1 | Register | Name | <First Name>,<Surname> | Name Bill Bull |
| 2 | Register | Address | <Address> | Address 4 Clinton Street |
| 3 | Cash Deposit | Flash | <Mobile Phone Number>,<Card PIN> | Flash 0800709890 34627236544 |
| 4 | Cash Transfer from FlashMeCash to Blackcard | Fund | <BC Account No>,<Amount>,<Password> | Fund 108430046801 5007658 |
| 5 | Fund Transfer Person-to-Person | Credit | <Mobile Phone No>,<Amount>,<Password> | Credit 0809067658 90008765 |
| 6 | Payments/Purchases | Credit | <merchant name>,<subscriber ID>,<Amount>,<Password> | Credit DSTV 98765098735 10200 8754 |
| 7 | Change Password | Pass | <old password>,<new password> | Pass 9856 0987 |
| 8 | Account Balance | Mbal | < password> | Mbal 5679 |

Table 1 illustrates the parameters required to be entered by a transaction participant or initiator entering into the aforementioned transactions (and others) according to the current embodiment of the present invention. Rows 1 and 2 correspond to Figures 2 and 3; row 3 corresponds to Figure 4; row 4 corresponds to Figure 6; row 5 corresponds to Figure 8; and rows 6 to 8 correspond to actions which a user of the system described above may take with respect to that system not previously mentioned. With respect to row 6, this is an implementation of merchant payments where cards are not necessary. Instead, the transaction backend creates a correspondence between a name and one of the accounts of the account store 66. When a transaction participant specifies this name as the party to receive the funds, the transaction backend will (if the various other requirements are met, as described above) transfer the specified funds to the account of the named merchant.

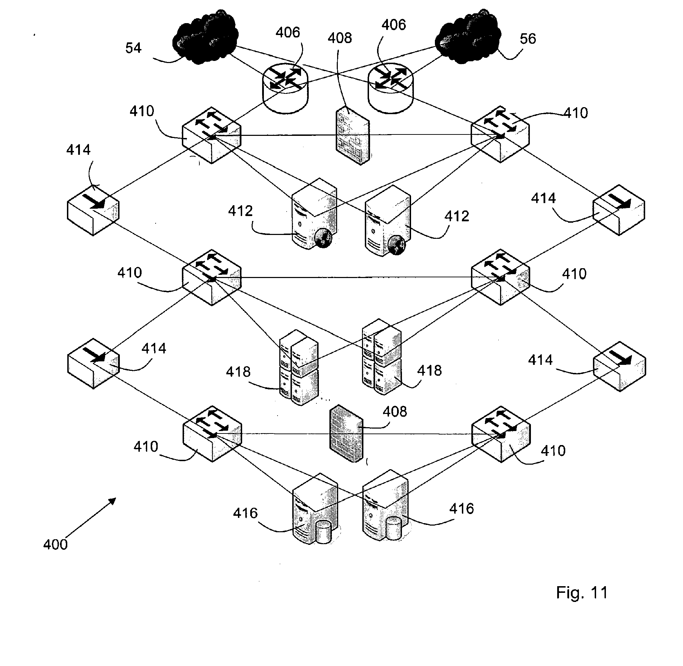

Figure 11 illustrates a network 400 of computing elements according to an embodiment of the invention. With reference to Figure 2, the network 400 corresponds to the transaction backend 50 connected to the cellular telephone network 54 and to the Internet 56. Network 400 comprises interconnected routers 406, switches 410, web servers 412, hubs 414, database servers 416and application servers 418. Each of the components of the network operate in a known manner and will not be further described herein. With reference to Figure 2 again, the web servers 412 fulfil the function of the communications server 52 (here being adapted to handle both web-based and cellular phone-based communications); the application servers 418 correspond to the transaction server 60 and the application servers 418 of Figure 11 include a transaction processing component; and the database servers 416 of Figure 11 correspond to the account store 66 of Figure 2.

## Claims

1. A transaction control system for authenticating one or more participants in a transaction, said control system comprising:
means for communicating with said one or more participant;
means for identifying said one or more participant;
means for initiating a transaction by suitable communication with a transaction system, wherein said initiating means only initiates said transaction when said participant is identified, and wherein said identifying means identifies said participant by an item used by said participant in communicating with said transaction control system.

2. The transaction system according to claim 1 wherein said item used by said participant is a mobile communications device and wherein said transaction control system identifies said participant according to an address of said mobile communications device.

3. The transaction system according to claim 2 wherein said communication means communicates according to the Short Message System (SMS) protocol and said mobile communications device is a mobile phone.

4. The transaction system according to claim 3 wherein said participant is identified according to a phone number of said mobile phone.

5. The transaction system according to any preceding claim wherein said transaction includes a transfer of funds.

6. The transaction system according to any preceding claim wherein said communication means communicates with two participants and wherein both participants are identified according to items used by said respective participants in communicating with said communication means of said transaction system.

7. A method of authenticating one or more participants in a transaction, said method comprising the steps of:
communicating between a transaction control system and said one or more participant;
authenticating said one or more participant;
communicating with a transaction system to initiate a transaction, wherein said step of communicating with said transaction system only occurs when said participant is authenticated, and wherein said step of authenticating said participant is based on an item used by said participant in communicating with said transaction control system.

8. The method of authenticating according to step 7 further comprising the step of receiving a Short Message Service (SMS) from a mobile phone under the control of said participant, wherein said step of identifying said participant identifies said participant according to a telephone number of said mobile phone.

9. The method of authenticating according to step 8 further comprising the step of communicating a content of said received SMS message to said transaction system.

10. The method according to claim 8 or claim 9 wherein said participant is identified by only said telephone number of said mobile phone.

11. The method according to claim 7 wherein said step of communicating between said one or more participant and said transaction control system utilizes a first communication type and wherein said item used to identify said participant is used in a for a second communication type, and wherein said first and second communication types are dissimilar.

12. The method according to claim 11 wherein said first communication type involves the use by the participant of a personal computer and wherein said second communication type involves the use by the participant of a mobile phone.

13. A transaction processing system comprising a participant identification system, a participant communication system and a storage system for recording an outcome of said transaction, wherein sad participant communication system uses a first item to establish a channel of communication between said participant and said transaction processing system, said participant identification system bases an identification of said participant on an item used to establish said communication channel, wherein said transaction processing system is adapted to authenticate said participant and, on a basis of said authentication, perform a transaction.

14. The system according to claim 13 wherein said transaction processing system is adapted to authenticate said participant if said identity of said participant confirms said participant as an account holder on said system.

15. The system according to claim 14 wherein no further participant authentication is required for a successful transaction.
